**Europäisches Patentamt**

**European Patent Office**

**Office européen des brevets**

(19)

(11) Veröffentlichungsnummer: **0 261 543**
**B1**

(12) **EUROPÄISCHE PATENTSCHRIFT**

(45) Veröffentlichungstag der Patentschrift:
28.03.90

(21) Anmeldenummer: 87113408.6

(22) Anmeldetag: 14.09.87

(51) Int. Cl.⁴: **B65D 85/68, B65D 71/00,**
**B65D 85/62, H02K 15/00**

(54) Verpackung.

(30) Priorität: 26.09.86 DE 3632852

(43) Veröffentlichungstag der Anmeldung:
30.03.88 Patentblatt 88/13

(45) Bekanntmachung des Hinweises auf die Patenterteilung:
28.03.90 Patentblatt 90/13

(84) Benannte Vertragsstaaten:
DE FR

(56) Entgegenhaltungen:
DE-U- 8 502 999
FR-A- 2 490 596
GB-A- 852 211

(73) Patentinhaber: Siemens Aktiengesellschaft,
Wittelsbacherplatz 2, D-8000 München 2(DE)

(72) Erfinder: Schmiedel, Günther, Schweinfurter Strasse 14,
D-8716 Dettelbach(DE)

ACTORUM AG

**Beschreibung**

Die Erfindung bezieht sich auf eine Verpackung mit Transportplatten zum Versand von Ventilatoren mit auf die Motorwellenenden der Antriebsmotore aufgesteckten Lüfterrädern mit ausgeformten Halterippen und Vertiefungen zur Festlegung der Ventilatoren; eine derartige Verpackung ist durch das DE-GM 85 02 999 für das Verpacken von Axialventilatoren bekannt.

Bei der durch das DE-GM 85 02 999 bekannten Wellpappe-Einwegverpackung werden U-profilierte Haupt-Kartonstreifen mit in Kartonstreifen-Längsrichtung verlaufenden, seitlich aufgerichteten Wandteilen auf einen Verpackungsboden aufgestellt und die Axialventilatoren jeweils mit ihrem motorseitigen Ende in Schräglage in durch die Wandteile gebildete Vertiefungen eingesteckt, derart daß die Lüfterrräder oberhalb der Wandteile freistehend überlappen und jeweils ein Motor zwischen zwei Flügeln des Lüfterrades des nachfolgenden Axialventilators angeordnet ist.

Durch die DE-AS 27 43 709 ist weiterhin eine wiederverwendbare Verpackung aus einem aus Karton und Kunststoffolie gebildeten Verbundwerkstoff bekannt, in die Halterippen und halbrunde Hohlräume zur Aufnahme der zu verpackenden Gegenstände ein- bzw. ausgeformt sind.

Gemäß Aufgabe vorliegender Erfindung soll eine wiederverwendbare Verpackung zum Versand von Radialventilatoren mit auf den Motorwellenenden des Antriebsmotors aufgedrückten Lüfterrädern geschaffen werden, durch die ein Schaden an den Ventilatoren, insbesondere ein Verdrücken der aus Kunststoff gebildeten Lüfterräder, beim Transport mit Sicherheit vermieden werden kann.

Die Lösung der gestellten Aufgabe gelingt bei einer Verpackung der eingangs genannten Art erfindungsgemäß durch die Lehre des Anspruchs 1, vorteilhafte Ausgestaltungen der Erfindung sind jeweils Gegenstand der Unteransprüche.

Die erfindungsgemäße Verpackung erlaubt ein einfaches Einlegen der Radialventilatoren durch die tragende Aufnahme des Motors in der seiner Außenfläche angepaßten Rundung, die in die Steifigkeit der Transportplatte vorteilhaft unterstützender Weise fortlaufend hintereinander, entsprechend dem jeweiligen Packabstand der Radialventilatoren, in eine durchgehende Mitten-Tragleiste eingeformt sind. Die axial seitliche Fixierung der derart in die Rundung eingelegten Radiallüfter erfolgt automatisch beim Einlegen durch die seitlichen Anlagebegrenzungen der eingeformten, gegen die Stirnseiten der Lüfterräder zur Anlage kommenden Anschläge.

Um mit ein und derselben Verpackung, insbesondere mit den gleichen Transportplatten, auch Radialventilatoren mit in zwei unterschiedlichen axialen Tiefen auf die Motorwellenden aufgedrückten Lüfterrädern verpacken bzw. sicher transportieren zu können, ist nach einer Ausgestaltung der Erfindung vorgesehen, daß für die axial langbauenden Radialventilatoren erste Außenanschläge vor den axial äußeren Stirnseiten der weniger tief aufgedrückten Lüfterräder und für die axial kurzbauenden Axialventilatoren zweite Innen-Anschläge vor den axial inneren Stirnseiten der axial tiefer aufgedrückten Lüfterräder angeordnet sind, wobei in herstellungstechnisch einfacher und gleichzeitig die Steifigkeit der Transportplatte erhöhender Weise die Außen-Anschläge in Form einer durchgehenden randseitigen äußeren Anschlagleiste zusammengefaßt und die Innen-Anschläge seitlich an die durchgehende Mitten-Tragleiste angeformt sind.

Zweckmäßigerweise sind die Transportplatten derart ausgebildet, daß jeweils zwei wechselseitig einander gegenüberliegende Platten eine Lage von Radialventilatoren umfassen, wobei die jeweils wechselseitig einander gegenüberliegenden Platten unmittelbar, d.h. nicht unter Auflage auf den Radialventilator, insbesondere den Antriebsmotor selbst, gegeneinander abgestützt sind. Zweckmäßigerweise sind zu der unmittelbar gegenseitigen Abstützung in die Mitten-Tragleiste zwischen den die Antriebsmotoren aufnehmenden Rundungen vorstehende Abstands-Nocken eingeformt. Die derart beschickten und gegebenenfalls gestapelten Transportplatten sind zum Versand in einen Stülpkarton eingelegt oder von einer Schrumpffolie umspannt.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

FIG 1 in einem Teilschnitt zwei Lagen von in einem Stülpkarton erfindungsgemäß aufgenommenen Radialventilatoren;

FIG 2 gemäß Schnittverlauf II-II aus FIG 1 die fertige Lagerung der unteren Radialventilatoren-Verpackungsreihe aus FIG 1;

FIG 3 eine Draufsicht auf eine einzelne Transportplatte mit zwei parallelen Mitten-Tragleisten;

FIG 4 eine seitliche Draufsicht auf die Transportplatte in FIG 3.

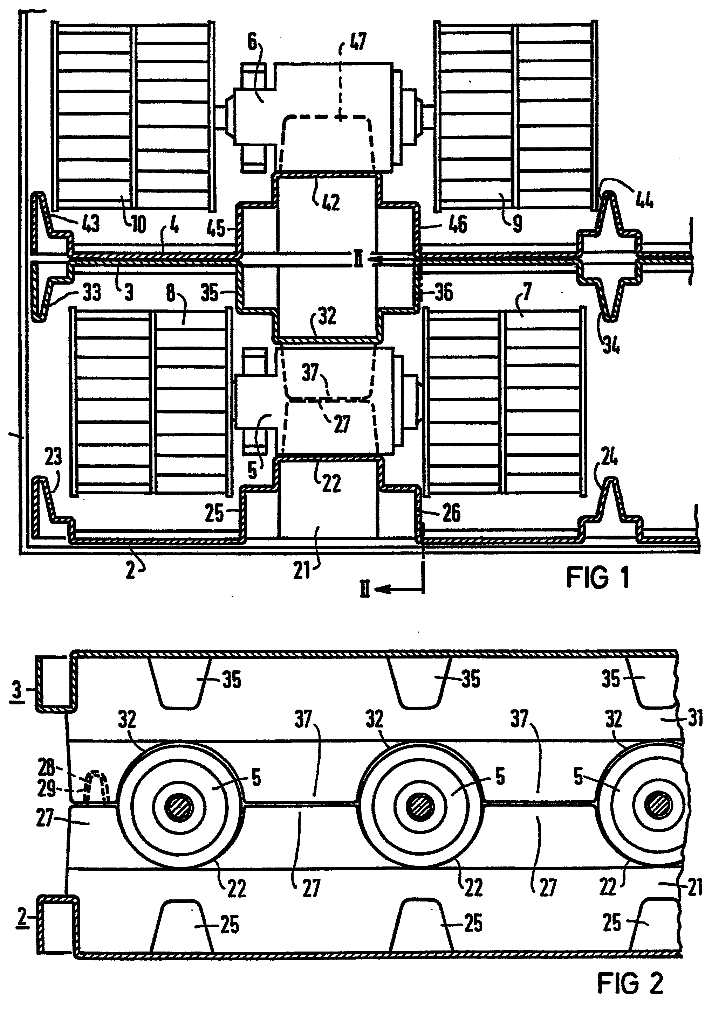

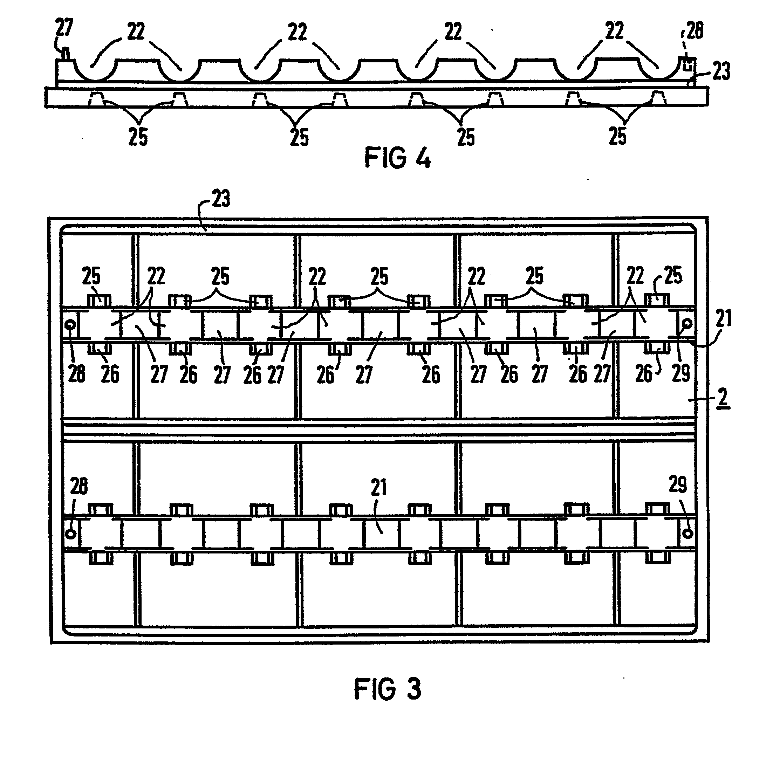

Gemäß FIG 1 ist auf den unteren Boden eines Stülpkartons 1 zunächst eine einzelne, in FIG 3 in Draufsicht gezeigte tiefgezogene Kunststoff-Transportplatte aufgelegt. Die als tiefgezogenes Einheitsbauteil ausgebildete Transportplatte 1 enthält im wesentlichen zwei Mitten-Tragleisten 21, in die Rundungen zur Aufnahme der Antriebsmotore mit den axial beidseitig auf die Motorwellenenden aufgedrückten Lüfterräder eingeformt sind, äußere Anschlagleisten 23,24 für die äußeren Stirnseiten der Lüfterräder sowie Innen-Anschläge 25,26 für die inneren Stirnseiten der Lüfterräder.

FIG 1 zeigt in der unteren Lage einen in die Rundung 22 der Mitten-Tragleiste 21 der ersten Transportplatte 2 eingelegten Antriebsmotor 5 eines axial kurzbauenden Radialventilators, bei dem die beidseitigen Lüfterräder 7,8 dicht bis zur jeweiligen Stirnseite des Antriebsmotors 5 auf die beidseitigen Motorwellenenden aufgedrückt sind. Zur axialen Fixierung des Radiallüfters dienen an die Mitten-Tragleiste 21 seitlich angeformte Innen-Anschläge 25,26, die an den benachbarten inneren Stirnseiten des Lüfterrades 7 bzw. des Lüfterrades 8 zur Anlage kommen.

Nachdem die erste Transportplatte 2 mit Radialventilatoren voll bestückt ist, wird eine zweite Transportplatte 3 wechselseitig gegenüberliegend aufgelegt, wobei deren Rundungen 32 nunmehr die in die erste Transportplatte 2 eingelegten Antriebsmotore 5 von ihrer oberen Seite in ihrer achsparallelen Lage umfassen. Ähnlich wie im Fall der ersten Transportplatte 2 wird das jeweilige Lüfterrad 7 bzw.8 an seiner inneren Stirnseite axial durch die inneren Anschläge 35 bzw.36 der zweiten Transportplatte 3 axial fixiert.

Wie insbesondere aus FIG 2 ersichtlich, liegen die erste Transportplatte 2 und die um 180° gedrehte, wechselseitig darübergelegte zweite Transportplatte 3 unmittelbar, d.h. nicht unter Aufdruck auf die eingelegten Motore 5, mittels dazu nach einer Ausgestaltung der Erfindung in die Mitten-Tragleisten 21 bzw.31 eingeformter Abstandsnocken 27 bzw.37 aufeinander auf. Die Rundungen 22 bzw.32 sind derart bemessen, daß die Antriebsmotore 5 zwar radial formschlüssig in den beidseitig umfassenden Rundungen 22 bzw.32 gehalten werden, jedoch zur richtigen Einpassung zwischen den inneren Anschlägen 25; 26 bzw. 35;36 achsparallel gleiten können.

Zum gegenseitigen Ausrichten der beiden gegenüberliegenden Transportplatten 2,3 dienen aus der Mitten-Tragleiste 21 bzw. herausgeformte vorstehende Führungsnocken 28, die wechselseitig in korrespondierende, in die Mitten-Tragleiste 21 bzw.31 eingeformte Führungsnocken-Aufnahmen 29 beim Aufeinanderlegen eingreifen und nach dem Ausrichten gleichzeitig zur Fixierung der ausgerichteten gegenseitigen Lage dienen können.

Wie aus FIG 1 ersichtlich, ist auf die obere zweite Transportplatte 3 wiederum wechselseitig gedreht eine dritte Transportplatte 4 aufgelegt, die im dargestellten Ausführungsbeispiel langbauende Radialventilatoren mit einem Antriebsmotor 6 und zu dessen Stirnseiten in größerem Abstand, d.h. mit geringerer axialer Tiefe aufgedrückte Lüfterräder 9,10 aufnimmt. Zur axialen Fixierung dieser langbauenden Radialventilatoren dienen nunmehr die in den Transportplatten erfindungsgemäß ebenfalls eingeformten äußeren Anschläge in Form von seitlich durchgehenden, gleichzeitig als Versteifungsrippen wirkenden Anschlagleisten 43,44, die gegen die äußeren Stirnseiten der Lüfterräder 9,10 zur Anlage kommen. Im Fall der unteren Packungslage zwischen den Transportplatten 2 bzw.3 sind ebenfalls derartige durchgehende Anschlagleisten 23,24 bzw.33,34 vorgesehen, die zwar bei der Aufnahme von kurzbauenden Radialventilatoren nicht benutzt, jedoch auch nicht für die Aufnahme dieser Ventilatoren hinderlich sind.

Es dürfte also ersichtlich sein, daß durch die erfindungsgemäße Verpackung in einfacher Weise eine sichere, die Lüfterräder nicht beschädigende Lagefixierung möglich ist, wobei die Transportplatten als Universalbauteil auch eine kombinierte Verpackung von Radialventilatoren mit kurzem oder längerem Aufdrückmaß der Lüfterräder auf die Wellenenden der Antriebsmotore erlauben.

**Patentansprüche**

1. Verpackung mit Transportplatten zum Versand von Ventilatoren mit auf die Motorwellenenden der Antriebsmotore aufgesteckten Lüfterrädern mit ausgeformten Halterippen und Vertiefungen zur Festlegung der Ventilatoren, dadurch gekennzeichnet, daß die Transportplatten für die Radialventilatoren als tiefgezogene Kunststoff-Platten (2;3;4) mit eingeformten Rundungen (22;32;42) zur radial abstützenden Einlage der Antriebsmotore (5;6) in eine achsparallele Transportlage und mit eingeformten Anschlägen zur axialen seitlichen Anlagebegrenzung für die Stirnseiten der Lüfterräder (7;8;9;10) der eingelegten Radialventilatoren ausgebildet sind.

2. Verpackung nach Anspruch 1 für die kombinierte Verpackung von Radialventilatoren mit in zwei unterschiedlichen axialen Tiefen auf die Motorwellenenden aufgedrückten Lüfterrädern, dadurch gekennzeichnet, daß für die axial langbauenden Radialventilatoren (6;9;10) erste Außen-Anschläge (Anschlagleisten 23,24 bzw.33,34 bzw.43,44) vor den axial äußeren Stirnseiten der weniger tief aufgedrückten Lüfterräder (9;10) und für die axial kurzbauenden Axialventilatoren (5;7;8) zweite Innen-Anschläge (25,26 bzw. 35,36 bzw.45,46) vor den axial inneren Stirnseiten der axial tiefer aufgedrückten Lüfterräder (7;8) angeordnet sind.

3. Verpackung nach Anspruch 1 oder 2, dadurch gekennzeichnet, daß die Rundungen (22;32;42) in eine Mitten-Tragleiste (21 bzw.31) entsprechend dem jeweiligem Packabstand der Radialventilatoren eingeformt sind.

4. Verpackung nach Anspruch 2 und/oder 3, dadurch gekennzeichnet, daß die Außen-Anschläge jeweils zu durchgehenden randseitigen äußeren Anschlagleisten (23;24 bzw.33;34 bzw.43;44) zusammengefaßt sind.

5. Verpackung nach einem der Ansprüche 2 - 4, dadurch gekennzeichnet, daß die Innen-Anschläge (25; 26 bzw.35;36 bzw.45;46) seitlich an die Mitten-Tragleiste (21 bzw.31 bzw.41) angeformt sind.

6. Verpackung nach einem der Ansprüche 1 - 5, dadurch gekennzeichnet, daß die Radialventilatoren von jeweils zwei wechselseitig einander gegenüberliegenden gleichartigen Platten (2;3) umfaßt sind.

7. Verpackung nach Anspruch 6, dadurch gekennzeichnet, daß die jeweils wechselseitig einander gegenüberliegenden Platten (2;3) unmittelbar gegeneinander abgestützt sind.

8. Verpackung nach Anspruch 7, dadurch gekennzeichnet, daß die jeweils wechselseitig einander gegenüberliegenden Platten (2;3) mittels in die Mitten-Tragleiste (21;31) zwischen den Rundungen (22;32) vorstehend eingeformter Abstands-Nocken (27;37) aufeinander abgestützt sind.

9. Verpackung nach einem der Ansprüche 6 - 8, dadurch gekennzeichnet, daß die jeweils wechselseitig einander gegenüberliegenden Platten (2;3) mittels wechselseitig eingeformter vorstehender Führungsnocken (28;38) bzw. korrespondierender Führungsnocken-Aufnahmen (29;39) für die einsteckbaren Führungsnocken (28;38) gegeneinander ausrichtbar und in der ausgerichteten Lage fixierbar sind.

10. Verpackung nach Anspruch 9, dadurch gekennzeichnet, daß die Führungsnocken (28;38) bzw. Führungsnocken-Aufnahmen (29; 39) in die Abstands-Nocken (37;37) eingeformt sind.

## Revendications

1. Emballage à plaques de transport, pour expédier des ventilateurs ayant des roues de ventilation enfilées sur les bouts des arbres des moteurs d'entraînement, comprenant des nervures de maintien et des cavités conformées pour l'immobilisation des ventilateurs, caractérisé en ce que les plaques de transport pour les ventilateurs radiaux sont constituées sous la forme de plaques en matière plastique à emboutissage profond (2; 3; 4) ayant des parties conformées en arrondi (22; 32; 42) pour l'introduction avec appui radial des moteurs d'entraînement (5; 6) dans une position de transport parallèle à l'axe et des butées conformées pour délimiter axialement l'appui latéral des côtés frontaux des roues (7; 8; 9; 10) des ventilateurs radiaux introduits dans l'emballage.

2. Emballage suivant la revendication 1 pour l'emballage combiné de ventilateurs radiaux ayant des roues de ventilation enfilées sur les bouts d'arbre à deux profondeurs axiales différentes, caractérisé en ce qu'il est prévu pour les ventilateurs radiaux (6; 9; 10) axialement longs des premières butées extérieures (nervures de butée (23, 24 et 33, 34 et 43, 44)) devant les côtés frontaux axialement extérieurs des roues de ventilateur (9; 10) enfilées le moins profondément et pour les ventilateurs axiaux axialement courts (5; 7; 8) des secondes butées intérieures (25, 26 et 35, 36 et 45, 46) devant les côtés frontaux axialement intérieurs des roues de ventilateur (7; 8) enfilées axialement le plus profondément.

3. Emballage suivant la revendication 1 ou 2, caractérisé en ce que les parties arrondies (22; 32; 42) sont formées dans une nervure de support médiane (21 et 31) en fonction de la distance des ventilateurs radiaux dans l'emballage.

4. Emballage suivant la revendication 2 et/ou 3, caractérisé en ce que les butées extérieures sont réunies en nervures extérieures de butées (23; 24 et 33; 33; 34 et 43; 44) continues et situées du côté du bord.

5. Emballage suivant l'une des revendications 2 à 4, caractérisé en ce que les butées intérieures (25; 26 et 35; 36 et 45; 46) sont issues latéralement de la nervure de support médiane (21 et 31 et 41).

6. Emballage suivant l'une des revendications 1 à 5, caractérisé en ce que les ventilateurs radiaux sont entourés, chacun, par des plaques (2; 3) de même type et mutuellement opposées.

7. Emballage suivant la revendication 6, caractérisé en ce que les plaques (2; 3) mutuellement opposées s'appuient directement l'une sur l'autre.

8. Emballage suivant la revendication 7, caractérisé en ce que les plaques (2; 3) mutuellement opposées s'appuient l'une sur l'autre au moyen de parties saillantes d'entretoisement (27; 37) ménagées en saillie entre les parties arrondies (22; 32) dans la nervure de support (21; 31) médiane.

9. Emballage suivant l'une des revendications 6 à 8, caractérisé en ce que les plaques (2; 3) mutuellement opposées peuvent, au moyen de saillies de guidage (28; 38) conformées de manière alternée et d'organes de réception correspondants (29; 39) des saillies de guidage (28; 38) qui peuvent être enfichées, être alignées les unes par rapport aux autres et peuvent être immobilisées en la position alignée.

10. Emballage suivant la revendication 9, caractérisé en ce que les saillies de guidage (28; 38) et les organes de réception des saillies de guidage (29; 39) sont ménagés dans les parties saillantes d'entretoisement (27; 37).

## Claims

1. Packing having transporting plates for the dispatch of fans having fan wheels, which are slipped onto the motor shaft ends of the drive motors, having holding ribs and recesses formed to shape for the localization of the fans, characterised in that the transporting plates for the radial fans are formed as cupped plastics plates (2; 3; 4) with round portions (22; 32; 42) moulded therein for radially supporting insertion of the drive motors (5; 6) into an axis-parallel transportation position and with stops moulded therein for axial lateral installation limitation for the faces of the fan wheels (7; 8; 9; 10) of the inserted radial fans.

2. Packing according to claim 1 for combined packing of radial fans with fan wheels which are pressed onto the motor shaft ends to two different axial depths, characterised in that for the radial fans (6; 9; 10) forming a long axial construction first outer stops (stop strips 23, 24 or 33, 34 or 43, 44 respectively) are arranged in front of the axially outer faces of the fan wheels (9; 10) which are pressed on to a lesser depth and for the axial fans (5; 7; 8) forming a short axial construction second inner stops (25, 26 or 35, 36 or 45, 46 respectively) are arranged in front of the axially inner faces of the fan wheels (7; 8) which are pressed on to an axially greater depth.

3. Packing according to claim 1 or 2, characterised in that the round portions (22; 32; 42) are moulded into a central supporting strip (21 or 31 respectively) in accordance with the respective packing spacing of the radial fans.

4. Packing according to claim 2 and/or 3, characterised in that the outer stops are combined, in each case, to form continuous outer stop strips (23; 24 or 33; 34 or 43; 44 respectively) on the edge side.

5. Packing according to one of the claims 2–4, characterised in that the inner stops (25; 26 or 35; 36 or 45; 46 respectively) are formed laterally with respect to the central supporting strip (21 or 31 or 41 respectively).

6. Packing according to one of the claims 1–5, characterised in that the radial fans are, embraced by, in each case, two similar plates (2; 3) which lie mutually opposite each other.

7. Packing according to claim 6, characterised in that the plates (2; 3), which lie mutually opposite each other in each case, are supported directly in relation to each other.

8. Packing according to claim 7, characterised in that the plates (2; 3), which lie mutually opposite each other in each case, are supported one on top of the other by means of spacing cams (27; 37) which are moulded into the central supporting strip (21; 31) between the round portions (22; 32) in a protruding manner.

9. Packing according to one of the claims 6–8, characterised in that the plates (2; 3), which lie mutually opposite each other in each case, can be aligned in relation to each other by means of mutually moulded-in protruding guide cams (28; 38) or corresponding guide cam receivers (29; 39) respectively for the guide cams (28; 38), which can be inserted therein, and can be fixed in the aligned position.

10. Packing according to claim 9, characterised in that the guide cams (28; 38) or guide cam receivers (29; 39) respectively are moulded into the spacing cams (37; 37) (sic).

FIG 1

FIG 2

FIG 4

FIG 3